# EUROPÄISCHE PATENTSCHRIFT

(11) **EP 1 681 939 B1**
(45) Veröffentlichungstag und Bekanntmachung des Hinweises auf die Patenterteilung: **08.04.2009**
(21) Anmeldenummer: 04797526.3
(22) Anmeldetag: 02.11.2004
(51) Int. Cl.: A22C 13/00, B65B 9/12

(54) **VERPACKUNGSHÜLLE, INSBESONDERE WURSTHÜLLE, DIE WIRKWARE ENTHÄLT, UND VERFAHREN ZUM ÖFFNEN DERSELBEN**
PACKAGING CASING, IN PARTICULAR SAUSAGE CASING CONTAINING A KNITTED FABRIC AND METHOD FOR OPENING SAID CASING
ENVELOPPE DE CONDITIONNEMENT, NOTAMMENT PEAU POUR SAUCISSE, CONTENANT UN PRODUIT A MAILLES, ET PROCEDE D'OUVERTURE ASSOCIE

(30) Priorität: 11.11.2003 DE 10352657
(43) Veröffentlichungstag der Anmeldung: 26.07.2006
(73) Patentinhaber: Huckfeldt & Thorlichen GmbH & Co., 25436 Tornesch (DE)
(72) Erfinder: HUCKFELDT, Gebhard, R., 22605 Hamburg (DE)
(74) Vertreter: Glawe, Delfs, Moll
(86) Internationale Anmeldenummer: PCT/EP2004/012382
(87) Internationale Veröffentlichungsnummer: WO 2005/046338

(56) Entgegenhaltungen:
- DE-A1- 3 725 263
- DE-B1- 2 546 278
- DE-U- 1 951 889
- DE-U1- 9 107 065

## Beschreibung

Die Erfindung bezieht sich auf eine Verpackungshülle, insbesondere Wursthülle, die aus Wirkware besteht oder diese als festigkeitsgebenden Bestandteil enthält. Insbesondere handelt es sich um ein Hüllnetz, das eine Wurst außerhalb der eigentlichen Wursthülle umgibt, um der Wurst eine besondere Form zu verleihen. Es kann sich aber auch um die eigentliche Wursthülle handeln (EP-B-106965) oder um eine Verpackungshülle für anderes Gut. Der Begriff Wirkware ist dabei im umfassendsten Sinne gemeint. Insbesondere soll er im Zusammenhang dieser Erfindungsbeschreibung auch Gestricke umfassen. Die Verwendung von Wirkware als festigkeitsgebender Bestandteil hat den Vorteil, daß die Hülle gegenüber punktförmig konzentrierten Kräften nachgeben kann und solchen Kräften gegenüber daher besondere Widerstandskraft hat. Dies hat aber auch die Folge, daß es nicht leicht ist, die Hülle zum Öffnen aufzureißen.

Bekannt ist eine Wursthülle (DE-U-9107065, DE-B-25 46 278, DE-U-19 51 889), die eine Längsnaht hat, die durch einen Ziehfaden zusammengehalten ist. Das ist ein Faden, der in Längsrichtung aus der Naht herausgezogen werden kann, wodurch der Zusammenhalt der Naht aufgelöst wird und die Hülle vom Inhalt abgezogen werden kann. Jedoch verläuft der Ziehfaden zickzackförmig in der Naht und unterliegt dadurch einer so hohen Reibkraft beim Herausziehen, daß dies nur für sehr kurze Nahtabschnitte praktisch gelingen kann und im übrigen davon abhängig ist, das ein Ende des Ziehfadens gegriffen werden kann, was in der Regel nur schwer möglich ist.

Die Erfindung sucht einen Weg, das Öffnen der Wursthülle zu erleichtern. Sie zielt dabei insbesondere auf die gewerbliche Verarbeitung, beispielsweise zur Herstellung von Aufschnittverpackungseinheiten. Dafür ist es wichtig, daß sich die Verpackungshülle rasch und rückstandsfrei von der Wurst bzw. anderem Verpackungsinhalt lösen läßt.

Die Erfindung erreicht dieses ziel durch eine Verpackungshülle gemäß Anspruch 1. Das mit dem darin beschriebenen Lösefaden ausgeübte Verfahren zum Öffnen der Verpackungshülle, zeichnet sich dadurch aus, daß man vor dem Öffnen den Festigkeitsverlust wenigstens eines in der Wirkware enthaltenen Lösefadens herbeiführt oder abwartet. Solange die Festigkeit der Hülle erforderlich ist, beispielsweise um dem Verpackungsinhalt eine bestimmte Gestalt aufzuprägen, besitzt der Lösefaden die dafür erforderliche Festigkeit. Danach duldet man seinen Festigkeitsverlust oder führt ihn gezielt zum Öffnen der Hülle herbei. Der Lösefaden bzw. das zu seiner Entfestigung verwendete Verfahren wird so gewählt, daß nur der Lösefaden, nicht aber die übrige Hülle von dem Festigkeitsverlust betroffen wird. Die übrige Hülle kann also nach dem Öffnen der Naht herkömmlich entfernt werden.

Bei einer ersten Gruppe von Ausführungsmöglichkeiten wird die Festigkeit des Löseverfahrens gezielt verringert, sobald die Hülle geöffnet werden soll. Wenn der Lösefaden temperaturempfindlich gewählt wird, wird er auf die für den Festigkeitsverlust notwendige Temperatur gebracht. Wenn er beispielsweise thermoplastisch ist, wird er erhitzt. Wenn für den Faden ein Material gewählt ist, das bei tiefer Temperatur versprödet, wird der Faden entsprechend gekühlt.

Im Falle des thermoplastischen Fadens wählt man ein Fadenmaterial, dessen Erweichungstemperatur hinreichend hoch über derjenigen Temperatur liegt, bei der die Wurst, solange sie noch nicht formfest ist, gekocht, geräuchert oder sonst wie behandelt wird. Wenn beispielsweise die Behandlungstemperatur bei 80°C liegt, kann ein Fadenmaterial gewählt werden, dessen Erweichungstemperatur im Bereich von 100 bis 200°C, vorzugsweise im Bereich von 110 bis 140°C liegt. Wenn die Hülle geöffnet werden soll, wird der Faden bzw. der Bereich der Hülle, der den Faden enthält, auf die Erweichungstemperatur erhitzt, und die Hülle wird gelöst. Die Erweichungstemperatur des Lösefadens wird ferner so gewählt, daß während der kurzen Zeitdauer, in welcher der den Lösefaden enthaltende Bereich der Hülle der Lösetemperatur ausgesetzt wird, der Verpackungsinhalt nicht oder nicht nennenswert durch die Erwärmung beeinträchtigt wird. Die Erhitzung des Lösefadens kann mit allen dafür geeigneten Mitteln erfolgen, beispielsweise durch einen Heißluftstrahl, eine Infrarotlichtquelle oder Ultraschall. Die Erhitzung wird zweckmäßigerweise nicht nur zeitlich, sondern auch örtlich auf das notwendige Maß beschränkt. Damit dies bei manueller Behandlung leicht möglich ist, kann der Lösefaden oder derjenige Bereich der Hülle, die den Lösefaden enthält, optisch oder in anderer Weise so markiert werden, daß er durch Personal oder maschinell leicht wahrnehmbar ist.

Bei einer anderen Gruppe von Ausführungsformen verliert der Lösefaden seine Festigkeit durch die Behandlung, der das Verpackungsgut samt Verpackung ausgesetzt wird. Dies sind im Falle von Wurst insbesondere das Kochen in einer wässrigen Brühe oder das Räuchern oder das Trocknen an Luft. Wenn der Verpackungsinhalt schon vor dieser Behandlung die erforderliche Eigenfestigkeit erreicht hat, darf diese Behandlung ohne Verzögerung zum Festigkeitsverlust des Lösefadens führen, es sei denn, daß er noch bis zum Verkauf an der Ware verbleiben soll. Wenn aber die Eigenfestigkeit des Verpackungsinhalts erst während dieser Behandlung entsteht, muß dafür gesorgt werden, daß dem Festigkeitsverlust des Lösefadens mindestens eine äquivalente Zunahme der Eigenfestigkeit des Verpackungsinhalts entspricht. Dieses Ziel läßt sich durch geeignete Materialauswahl leicht erreichen. Wenn beispielsweise die Festigkeit des Lösefadens auf einem in der Kochbrühe der Wurst lösbaren Bestandteil beruht, so wird die Lösegeschwindigkeit dieses Bestandteils so niedrig eingestellt, das der Lösefaden hinreichende Festigkeit behält, solange dies erforderlich ist. Der Lösefaden kann auch gezielt einer chemischen Veränderung ausgesetzt werden, beispielsweise durch Säuren oder Basen.

Bei einer dritten Gruppe von Ausführungsformen verliert der Lösefaden seine Festigkeit durch Zeitablauf unter den obwaltenden Behandlungs- und Lagerungsbedingungen. Beispielsweise kann der Lösefaden aus einem Material bestehen oder ein Material enthalten, das in bezug auf die Zeitdauer, die von der Herstellung der Wurst bis zum Verbrauch vergeht, einem kalkulierbaren Alterungsprozeß unterliegt, der im vorhersehbaren Öffnungszeitpunkt zu dem gewünschten Festigkeitsverlust geführt haben wird. Dieser Prozeß wird in der Regel nicht unabhängig sein von der in dieser Zeitdauer stattfindenden Behandlung. Beispielsweise kann ein Lösefaden mit einem Inhaltsstoff verwendet werden, der nur in Anwesenheit hoher Feuchtigkeit fest ist und im Laufe voranschreitender Trocknung die Festigkeit verliert. Dazu können Eiweißstoffe geeignet sein, die im feuchten Zustand flexibel und fest sind und bei Trocknung spröde und rissig werden und dadurch ihre Fe stigkeit verlieren.

Der Lösefaden wird in die Wirkware derart eingebaut, daß er zwei Maschenreihen verbindet, die sich bei dem Verlust seiner Festigkeit voneinander lösen lassen, wodurch die Verpackung insgesamt geöffnet wird. Vorzugsweise verläuft der Lösefaden bzw. die Maschenreihe, die er bildet, in Längsrichtung der langgestreckt ausgebildeten Verpackungshülle bzw. Wursthülle. Diese Form ergibt sich beispielsweise bei der Verwendung von Raschelware als Gewirk. Jedoch kann auch ein Querverlauf der Lösefadens zu einem befriedigenden Ergebnis führen. In den meisten Fällen genügt es, wenn eine Verpackungshülle jeweils einen Lösefaden aufweist. Es können aber auch mehrere Nähte mit Lösefaden vorgesehen sein, die vorzugsweise in Längsrichtung verlaufen und etwas gleichen Umfangsabstand voneinander haben.

Es ist nicht erforderlich, daß der Lösefaden seine Festigkeit vollständig verliert. Es genügt, wenn sie so weit herabgesetzt ist, daß die Verpackungsabschnitte, die von dem Lösefaden verbunden sind, unter Zerstörung des Lösefadens auseinandergerissen werden können.

## Patentansprüche

1. Verpackungshülle, insbesondere Wursthülle, die aus Wirkware besteht oder diese als festigkeitsgebenden Bestandteil enthält und wenigstens eine Naht mit einem Lösefaden aufweist, **dadurch gekennzeichnet, dass**
- der Lösefaden seine Festigkeit unter dem Einfluss einer mit dem Verpackungsinhalt verträglichen Behandlung verliert, wobei
i) der Lösefaden temperaturempfindlich ist und auf die für den Festigkeitsverlust notwendige Temperatur gebracht wird und/oder
ii) der Festigkeitsverlust des Lösefadens auf Versprödung beruht und/oder
iii)der Festigkeitsverlust des Lösefadens darauf beruht, dass er oder ein wesentlicher Bestandteil in einem Behandlungsmedium lösbar ist,
oder
- der Lösefaden aus einem Material besteht oder Material enthält, welches einen kalkulierbaren Alterungsprozess des Lösefadens, gegebenenfalls unter den obwaltenden Behandlungs- und Lagerbedingungen, bedingt und zu einem Festigkeitsverlust des Lösefadens durch Zeitablauf führt.

2. Hülle nach Anspruch 1, **dadurch gekennzeichnet, dass** sie ein die eigentliche Wursthülle umgebendes, formbestimmendes Hüllnetz ist.

3. Hülle nach Anspruch 1 oder 2, **dadurch gekennzeichnet, dass** der Lösefaden thermoplastisch ist.

4. Hülle nach einem der Ansprüche 1 bis 3, **dadurch gekennzeichnet, dass** mehrere Längsnähte mit Lösefaden über den Umfang verteilt sind.

5. Verfahren zum Öffnen einer Verpackungshülle, insbesondere Wursthülle, die aus einer Wirkware besteht oder diese als festigkeitsgebenden Bestandteil enthält und wenigstens eine Naht mit einem Lösefaden aufweist nach einem der Ansprüche 1 bis 4, **dadurch gekennzeichnet, dass** man vor dem Öffnen den Festigkeitsverlust des Lösefadens abwartet, der sich unter dem Einfluss der mit dem Verpackungsinhalt verträglichen Behandlung oder durch Zeitablauf vollzieht.

6. Verfahren nach Anspruch 5, **dadurch gekennzeichnet, dass** der Lösefaden seine Festigkeit bei einer Lösetemperatur verliert, die oberhalb der Temperatur einer etwaigen Behandlung des verpackten Verpackungsinhalts und unterhalb einer Temperatur liegt, bei der der Verpackungsinhalt während der zum Lösen des Lösefadens erforderlichen Zeitdauer geschädigt werden kann, und dass der Lösefaden zum Öffnen der Hülle auf die Lösetemperatur erhitzt wird.

7. Verfahren nach Anspruch 6, **dadurch gekennzeichnet, dass** der Verpackungsinhalt samt der Verpackungshülle einer Behandlung unterworfen wird, durch die seine Formstabilität wächst und die Festigkeit des Lösefadens vermindert wird.

8. Verfahren nach Anspruch 7, **dadurch gekennzeichnet, dass** der Lösefaden einen bindenden oder weichmachenden Bestandteil enthält, der durch die Behandlung mindestens teilweise entfernt wird.

9. Verfahren nach Anspruch 8, **dadurch gekennzeichnet, dass** die Behandlung nass ist und der Lösefaden seine Festigkeit mindestens teilweise durch die nachfolgende Trocknung verliert.

## Claims

1. A packaging casing, in particular sausage casing, which consists of knitted fabric or contains the latter as a strengthening constituent and has at least one seam with a release thread, **characterized in that**
- the release thread loses its strength under the influence of a treatment compatible with the packaging contents, wherein
i) the release thread is temperature-sensitive and is brought to the temperature necessary for the loss of strength, and/or
ii) the loss in strength of the release thread is based on embrittlement, and/or
iii) the loss in strength of the release thread is based on the fact that the latter or an essential constituent is soluble in a treatment medium,
or
- the release thread consists of a material or contains a material which undergoes a calculable aging process, as the case may be under the prevailing treatment and storage conditions, and the release thread loses its strength as a result of time lapse.

2. The casing as claimed in claim 1, **characterized in that** it is a shape-determining casing net surrounding the actual sausage casing.

3. The casing as claimed in claims 1 or 2, **characterized in that** the release thread is thermoplastic.

4. The casing as claimed in one of claims 1 to 3, **characterized in that** a plurality of the longitudinal seams with release thread are distributed over the circumference.

5. A method for opening a packaging casing, in particular sausage casing, which consists of a knitted fabric or contains the latter as a strengthening constituent and has at least one seam with a release thread as claimed in one of claims 1 to 4, **characterized in that**, before opening, the loss in strength of the release thread is awaited, which takes place under the influence of the treatment compatible with the packaging contents or a result of a time lapse.

6. The method as claimed in claim 5, **characterized in that** the release thread loses its strength at a release temperature which lies above the temperature of any treatment of the packaged packaging content and below a temperature at which the packaging contents may be damaged during the period of time required for releasing the release thread, and **in that** the release thread is heated to the release temperature in order to open the casing.

7. The method as claimed in claim 6, **characterized in that** the packaging contents, together with the packaging casing, are subjected to a treatment, as a result of which their dimensional stability grows and the strength of the release thread is reduced.

8. The method as claimed in claim 7, **characterized in that** the release thread contains a binding or softening constituent which is at least partially removed as a result of the treatment.

9. The method as claimed in claim 8, **characterized in that** the treatment is wet, and the release thread loses its strength at least partially as a result of the subsequent drying.

## Revendications

1. Enveloppe de conditionnement, notamment peau pour saucisse, constituée d'un tissu à mailles ou contenant celui-ci comme partie de consolidation et présentant au moins une couture avec un fil de désolidarisation **caractérisée en ce que**
- le fil de désolidarisation perd sa solidité sous l'effet d'un traitement supportable pour le contenu de l'enveloppe de conditionnement,
i) le fil de désolidarisation est sensible à la température et est amené à la température nécessaire pour qu'il perde sa solidité et/ou
ii) la perte solidité du fil de désolidarisation repose sur la fragilisation et/ ou
iii) la perte solidité du fil de désolidarisation repose sur le fait que lui ou un composant essentiel peut être dissout dans un milieu de traitement,
ou
- le fil de désolidarisation est réalisé en un matériau ou contient un matériau qui conditionne un processus de conservation calculable du fil de désolidarisation, le cas échéant dans les conditions de traitement et de stockage existantes et amène une perte de solidité du fil de désolidarisation au fur et à mesure du temps passé.

2. Enveloppe selon la revendication 1, **caractérisée en ce qu'**elle est constituée d'un filet d'enveloppe enveloppant l'enveloppe de la saucisse proprement dite.

3. Enveloppe selon la revendication 1 ou 2, **caractérisée en ce que** le fil de désolidarisation est thermoplastique.

4. Enveloppe selon l'une des revendications 1 à 4, **caractérisée en ce que** plusieurs coutures longitudinales avec fil de désolidarisation sont réparties sur la périphérie.

5. Procédé d'ouverture d'une enveloppe de conditionnement, notamment peau pour saucisse, constituée par un tissu à mailles ou contenant celui-ci comme partie de consolidation et présentant au moins une couture avec un fil de désolidarisation selon l'une des revendications 1 à 4, **caractérisée en ce que** l'on attend, avant l'ouverture, la perte de solidité du fil de désolidarisation qui se produit sous l'effet du traitement supportable pour le contenu de l'enveloppe de conditionnement ou avec le temps.

6. Procédé selon la revendication 5, **caractérisée en ce que** le fil de désolidarisation perd sa solidité avec une température de dissolution qui se situe au-dessus de la température d'un traitement quelconque du contenu du conditionnement, et au-dessous d'une température à laquelle le contenu du conditionnement peut être détérioré pendant la durée nécessaire pour dissoudre le fil de désolidarisation et **en ce que** le fil de désolidarisation est porté à la température de dissolution pour l'ouverture de l'enveloppe.

7. Procédé selon la revendication 6, **caractérisée en ce que** le contenu du conditionnement ensemble avec l'enveloppe de conditionnement est soumis à un traitement par lequel sa rigidité est accrue et la solidité du fil de désolidarisation est réduite.

8. Procédé selon la revendication 7, **caractérisée en ce que** le fil de désolidarisation comporte un composant liant ou assouplisseur qui est est éliminé au moins en partie par le traitement.

9. Procédé selon la revendication 7, **caractérisée en ce que** le traitement est humide et que le fil de désolidarisation perd au moins partiellement sa solidité par le traitement de séchage subséquent.
